# FASCICULE DE BREVET EUROPEEN

(11) **EP 2 075 415 B1**
(45) Date de publication et mention de la délivrance du brevet: **19.10.2016**
(21) Numéro de dépôt: 07124098.0
(22) Date de dépôt: 27.12.2007
(51) Int. Cl.: F01D 9/04, F01D 5/26

(54) **Structure annulaire de stator allégée pour turbomoteur d'aéronef**
Ringstruktur des Stators in leichterer Ausführung für das Triebwerk eines Luftfahrzeugs
Lightened annular stator structure for aircraft turboshaft engine

(43) Date de publication de la demande: 01.07.2009
(73) Titulaire: Techspace Aero, 4041 Milmort - Herstal (BE)
(72) Inventeur: Derclaye, Alain, 4218, Couthuin (BE); Ernst, Philippe, 4700, Eupen (BE); Lebrun, Rodolphe, 5000, Namur (BE)
(74) Mandataire: Ilgart, Jean-Christophe

(56) Documents cités:
- EP-A- 0 433 111
- EP-A- 1 219 785
- EP-A1- 0 219 445
- FR-A- 2 330 276
- FR-A- 2 456 836
- GB-A- 2 110 768
- GB-A- 2 272 027
- GB-A- 2 418 709
- US-A- 3 879 831
- US-A- 4 546 047
- US-A- 5 062 767
- US-A- 5 791 879
- US-A1- 2003 185 673
- US-B1- 6 409 472

## Description

La présente invention se rapporte de façon générale à un turbomoteur d'aéronef, de préférence du type turboréacteur ou turbopropulseur.

Plus particulièrement, l'invention concerne une structure annulaire de stator pour module d'un tel turbomoteur, comprenant une virole destinée à délimiter radialement vers l'intérieur un flux primaire traversant ce turbomoteur.

La virole, également dite virole intérieure, présente de façon connue une section en forme globale de U, dit U renversé en raison du fait que les deux branches du U s'étendent sensiblement dans une direction radiale intérieure à partir de la base de ce U, dont la surface extérieure est épousée par le flux primaire précité. Une telle virole est par exemple connue du document FR 2 404 102. Une virole est aussi par exemple connue par le document GB 2272027.

Pour maintenir les aubes de stator qui s'étendent radialement vers l'extérieur à partir de celle-ci, la virole intérieure, habituellement métallique, comprend une pluralité d'ajours espacés circonférentiellement, chacun pratiqué dans l'épaisseur de la base du U. A cet égard, il est noté qu'un matériau abradable, pouvant également remplir le rôle d'amortisseur de vibrations, est disposé sur la paroi interne de la virole, et remplit généralement chaque ajour afin de limiter les vibrations subies par les aubes de stator, en fonctionnement.

La structure annulaire précitée comprend par conséquent la virole équipée d'un revêtement radialement intérieur formant piste d'étanchéité annulaire, destiné à être contacté par une partie tournante du turbomoteur, et rapporté sur la virole. De façon connue, ce revêtement dit abradable est généralement contacté par un dispositif d'étanchéité porté par le rotor associé au stator concerné, un tel dispositif d'étanchéité étant qualifié de labyrinthe ou de dispositif à léchettes.

Bien que cette solution soit relativement répandue, elle n'est pas totalement satisfaisante, notamment en terme de masse globale, étant donné que le revêtement radialement intérieur de densité sensiblement importante est généralement prévu en grande quantité pour combler la structure annulaire jusqu'à la surface intérieure de la base du U.

L'invention a donc pour but de proposer une structure annulaire de stator pour module de turbomoteur remédiant au moins partiellement au problème mentionné ci-dessus, relatif aux réalisations de l'art antérieur.

Pour ce faire, l'invention a pour objet un secteur de structure annulaire de stator pour module de turbomoteur d'aéronef selon la revendication 1, ladite structure comprenant une virole de stator destinée à délimiter radialement vers l'intérieur un flux primaire traversant ledit turbomoteur, ladite virole comprenant une pluralité d'ajours chacun destiné à recevoir le pied d'une aube de stator, ladite structure annulaire comprenant en outre un revêtement radialement intérieur formant piste d'étanchéité annulaire et réalisé dans un premier matériau, ledit revêtement radialement intérieur étant destiné à être contacté par une partie tournante dudit turbomoteur, et rapporté sur ladite virole. Selon l'invention, la structure annulaire comprend en outre, interposés entre ladite virole et ledit revêtement intérieur, des moyens de remplissage réalisés dans un second matériau disposant d'une densité inférieure à celle dudit premier matériau.

Par conséquent, la structure annulaire selon l'invention présente avantageusement une masse affaiblie par rapport aux réalisations de l'art antérieur, étant donné qu'une partie du revêtement radialement intérieur est remplacée par les moyens de remplissage de densité inférieure. Ces moyens de remplissage peuvent s'étendre sur toute,ou partie de la longueur circonférentielle de la structure annulaire, toujours entre la virole et le revêtement radialement intérieur, ce dernier permettant à lui seul de former la piste d'étanchéité.

De préférence, ledit second matériau est de la mousse, de préférence non-métallique, et à cellules fermées, telle que de la mousse rigide polymethacrylimide.

De préférence, le rapport entre les densités des premier et second matériaux est inférieur à 0,1.

Toujours de manière préférentielle, comme évoqué ci-dessus, lesdits moyens de remplissage sont interposés entre ladite virole et ledit revêtement intérieur formant piste d'étanchéité, sur toute ou partie de la longueur circonférentielle. Dans un premier cas envisagé, les moyens de remplissage s'étendent donc circonférentiellement de manière interrompue, par exemple entre les pieds d'aubes traversant les ajours de la virole de la structure annulaire. Dans un second cas, éventuellement combinable au premier cas, les moyens de remplissage s'étendent sur tout le pourtour de la structure annulaire, en formant un anneau en matériau léger, de préférence en contact fixe avec la virole ajourée.

De manière préférentielle, ladite virole présente une section en forme globale de U dont les deux branches du U s'étendent sensiblement dans une direction radiale intérieure à partir de la base de ce U, ladite virole comprenant une pluralité d'ajours chacun destiné à recevoir le pied d'une aube de stator, chaque ajour étant pratiqué à travers ladite base du U.

D'une manière plus générale, il est prévu que ladite virole présente une section de forme générale ouverte dans la direction radiale intérieure, et comprenant une base de délimitation du flux primaire, ladite virole comprenant une pluralité d'ajours chacun destiné à recevoir le pied d'une aube de stator, chaque ajour étant pratiqué à travers ladite base. Ainsi, d'autres formes que le U sont envisageables pour la section ouverte radialement vers l'intérieur, sans sortir du cadre de l'invention. A titre d'exemple illustratif, il peut être supprimé la branche aval du U.

Dans le cas préféré du U, les moyens de remplissage sont préférentiellement agencés sur la surface intérieure de la base du U, c'est-à-dire celle opposée à la surface de délimitation du flux primaire.

Dans cette configuration, chaque ajour est par exemple prolongé par des moyens de raidissement de la virole en saillie à partir de ladite base du U, sensiblement dans ladite direction radiale intérieure, lesdits moyens de raidissement prennent la forme d'une nervure s'étendant sur sensiblement tout le pourtour de l'ajour qu'elle définit.

Par conséquent, cette réalisation est remarquable en ce que chaque ajour ne s'étend plus seulement sur l'épaisseur de la base du U, mais est prolongé radialement vers l'intérieur par des moyens en saillie servant simultanément à raidir la virole. L'emploi de matériaux autres que des matériaux métalliques peut ainsi être envisagé, grâce à la rigidité procurée par l'adjonction de ces moyens de raidissement. Comme cela sera décrit ultérieurement, l'emploi d'un matériau composite devient donc envisageable, ce qui procure un avantage réel en terme de masse, en particulier par rapport aux solutions métalliques connues de l'art antérieur.

En outre, en raison de la présence d'ajours s'étendant sur une distance supérieure à l'épaisseur de la base de U formant seulement une partie de ces ajours, les aubes se trouvent mieux maintenues, avec une précision de positionnement accrue. Enfin, les moyens de raidissement forment des barrières physiques entre les ajours, facilitant ainsi la mise en place ultérieure d'éléments dans les espaces formés par ces barrières, tels que les moyens de remplissage, comme cela sera explicité ci-après.

Il est noté que chaque nervure suit de préférence une ligne fermée correspondant au pourtour de l'ajour, ce dernier étant donc constitué d'une part à l'aide de l'ouverture pratiquée dans la base du U de la virole, et d'autre part par la nervure fermée définissant intérieurement un espace de même géométrie que l'ouverture précitée qu'il prolonge, garantissant de ce fait un ajour sensiblement homogène et continu.

Néanmoins, sans sortir du cadre de l'invention, la nervure pourrait être réalisée à l'aide de deux demi-nervures placées respectivement de part et d'autre de l'ajour, donc espacées circonférentiellement, et s'étendant chacune de l'une à l'autre des deux branches du U. En outre, dans le cas mentionné ci-dessus de la nervure continue et fermée, cette même nervure peut également contacter chacune des deux branches du U, en se fondant dans celles-ci.

Grâce à la présence de ces nervures, un espace ouvert dans ladite direction radiale intérieure est formé entre deux ajours quelconques directement consécutifs, ledit espace ouvert étant délimité dans la direction radiale extérieure par la base du U, et dans les deux sens de la direction circonférentielle par les deux nervures des deux ajours quelconques directement consécutifs, respectivement. Ainsi, lesdits moyens de remplissage peuvent avantageusement être logés au moins partiellement dans lesdits espaces ouverts, où ils sont parfaitement confinés. Cette configuration permet donc de ne remplir que partiellement les espaces ouverts avec le revêtement radialement intérieur en premier matériau, voire de ne pas le remplir du tout avec ce premier matériau de densité plus forte que le second matériau constitutif des moyens de remplissage occupant les espaces ouverts. Avec cet agencement où les moyens de remplissage de plus faible densité occupent tout ou partie des espaces ouverts, voire s'étendant au-delà de ces derniers, il en résulte un gain de masse non négligeable. A titre indicatif, les espaces ouverts précités, destinés à être remplis au moins partiellement à l'aide des moyens de remplissage de plus faible densité, sont préférentiellement rencontrés quel que soit le type de moyens de raidissement adopté.

Selon un mode de réalisation envisagé, la structure annulaire décrite ci-dessus forme une pièce unique continue, par exemple réalisée à partir de secteurs angulaires de virole rapportés fixement les uns aux autres, bout à bout. Alternativement, il peut s'agir d'un anneau métallique réalisé d'une seule pièce.

A cet égard, selon un autre mode de réalisation envisagé, la structure annulaire est réalisée de façon segmentée à l'aide de plusieurs secteurs angulaires adjacents, chacun intégrant un secteur de virole pourvu d'une pluralité d'ajours. Cette configuration se révèle particulièrement intéressante en ce sens où elle autorise un faible déplacement relatif des secteurs de structure annulaire les uns par rapport aux autres, un tel déplacement pouvant en effet survenir suite à une dilatation thermique différentielle des composants du stator, et résultant par exemple de l'emploi de matériaux différents pour la réalisation de la virole extérieure supportant les aubes et pour la réalisation de la virole intérieure intégrée dans la structure annulaire objet de l'invention.

Dans cette configuration segmentée circonférentiellement, les secteurs angulaires formant conjointement la structure annulaire sont donc dépourvus de liaisons mécaniques rigides directes les reliant les uns aux autres, de faibles jeux pouvant même être prévus entre-ceux-ci. A cet égard, les secteurs sont montés sur le stator de préférence uniquement par le biais des aubes qu'ils portent. Cela facilite notamment les opérations de maintenance, étant donné qu'il est possible de démonter chacun des secteurs angulaires indépendamment les uns des autres, par exemple sans retirer les aubes qui peuvent rester maintenue à leur extrémité radiale externe par la virole extérieure de stator.

La segmentation de la virole de la structure annulaire permet en outre l'emploi d'un outillage de fabrication simplifié, moins coûteux, et plus facile d'utilisation.

A cet égard, l'invention concerne également un secteur de structure annulaire de stator pour module de turbomoteur d'aéronef selon la revendication 1, ledit secteur comprenant un secteur de virole de stator destiné à délimiter radialement vers l'intérieur un flux primaire traversant ledit turbomoteur, ledit secteur de virole comprenant une pluralité d'ajours chacun destiné à recevoir le pied d'une aube de stator, ledit secteur de structure annulaire comprenant en outre un secteur de revêtement radialement intérieur formant piste d'étanchéité annulaire et réalisé dans un premier matériau, ledit secteur de revêtement radialement intérieur étant destiné à être contacté par une partie tournante dudit turbomoteur, et rapporté sur ledit secteur de virole. Selon l'invention, il comprend en outre, interposés entre ledit secteur de virole et ledit secteur de revêtement intérieur, des moyens de remplissage réalisés dans un second matériau disposant d'une densité inférieure à celle dudit premier matériau.

D'autre part, il est à comprendre que le secteur de structure annulaire selon l'invention est susceptible de présenter chacune des caractéristiques particulières décrites ci-dessus pour la structure annulaire elle-même, sans sortir du cadre de l'invention.

Par ailleurs, l'invention a également pour objet une partie de stator pour module de turbomoteur d'aéronef comprenant une structure annulaire telle que décrite ci-dessus, que celle-ci soit réalisée de façon segmentée ou de manière à former une pièce unique et continue.

Ladite partie de stator comprend une pluralité d'aubes de stator chacune montée dans un ajour de ladite virole, chaque ajour étant rempli d'un matériau amortisseur de vibrations coopérant avec le pied de l'aube de stator associée.

De préférence, pour un gain de masse et de coût, la virole est préférentiellement réalisée en matériau composite, de préférence comprenant une résine thermoplastique, par exemple associée à des fibres de carbone et/ou à des fibres de verre. A titre d'exemple indicatif, il peut s'agir d'une résine thermoplastique du type polyetherimide.

Afin d'assurer une géométrie et une qualité de réalisation satisfaisantes, propices à un bon écoulement aérodynamique du flux primaire sur la virole intérieure, celle-ci est de préférence réalisée par moulage par injection de matériau composite, de préférence à haute pression.

Dans le cas d'une structure annulaire continue, le revêtement est également préférentiellement continu sur 360°, tandis que dans le cas d'une structure annulaire segmentée telle qu'exposée ci-dessus, le revêtement est préférentiellement segmenté d'une manière sensiblement identique à celle de la virole faisant partie intégrante de la structure annulaire.

Dans le cas préférentiel d'une structure annulaire intérieure segmentée, il est prévu que lesdits secteurs angulaires adjacents soient dépourvus de support. Comme mentionné ci-dessus, les secteurs sont alors montés sur le stator de préférence uniquement par le biais des aubes qu'ils portent, et qui sont elles-mêmes destinées à être rattachées à la virole extérieure.

De plus, on peut prévoir qu'à chaque ajour sont associés des moyens mécaniques de rétention de l'aube de stator associée, lesdits moyens mécaniques de rétention coopérant avec lesdits moyens de raidissement formant partie dudit ajour.

Selon un premier type de réalisation, les moyens mécaniques de rétention prennent la forme d'un clip présentant un support en appui sur une extrémité radiale intérieure des moyens de raidissement, ainsi qu'une fente de rétention de pied d'aube portée par ledit support et pénétrant dans l'ajour.

Selon un second type de réalisation, les moyens mécaniques de rétention prennent la forme d'une plaquette de rétention traversant lesdits moyens de raidissement de l'ajour, ainsi que le pied de l'aube de stator logé dans l'ajour.

L'invention a également pour objet un module de turbomoteur d'aéronef comprenant au moins une partie de stator telle que décrite ci-dessus, le module étant préférentiellement un compresseur, de préférence basse pression, mais pouvant alternativement être une turbine, sans sortir du cadre de l'invention.

Enfin, l'invention a pour objet un turbomoteur pour aéronef comprenant au moins un module tel que décrit ci-dessus, le turbomoteur étant de préférence un turboréacteur.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique partielle d'un compresseur basse pression pour turbomoteur, selon un mode de réalisation préféré de la présente invention ;
- la figure 2 représente une vue en perspective d'un ensemble participant à la formation d'une partie de stator du compresseur montré sur la figure 1 ;
- la figure 3 représente une vue agrandie et détaillée en perspective d'une partie de l'ensemble montré sur la figure 2 ;
- la figure 4 représente une vue éclatée de celle montrée sur la figure 3 ;
- la figure 5 représente une vue en perspective, depuis l'intérieur, du secteur angulaire de virole appartenant à l'ensemble montré sur les figures 2 à 4 ;
- la figure 6 représente une vue en coupe prise le long de la ligne VI-VI de la figure 5 ;
- les figure 7 à 9 représentent schématiquement les différentes étapes d'obtention de l'ensemble montré sur les figures 2 à 4 ;
- la figure 10 représente une vue partielle en perspective du secteur angulaire de virole montré sur la figure 5, dont l'un des ajours à été représenté équipé d'un dispositif mécanique de rétention d'aube selon une première forme de réalisation ;
- la figure 11 représente une vue détaillée en perspective du dispositif mécanique de rétention d'aube montré sur la figure 10 ;
- la figure 12 représente une vue en coupe prise le long de la ligne XII-XII de la figure 10 ;
- la figure 13 représente une vue partielle en perspective du secteur angulaire de virole montré sur la figure 5, dont l'un des ajours à été représenté équipé d'un dispositif mécanique de rétention d'aube selon une seconde forme de réalisation ;
- la figure 14 représente une vue en perspective d'un ensemble participant à la formation d'une partie de stator du compresseur montré sur la figure 1, selon un autre mode de réalisation préféré ;
- la figure 15 représente une vue en coupe prise le long de la ligne XV-XV de la figure 14.;
- la figure 16 représente une vue similaire à celle montrée sur la figure 15, sur laquelle le revêtement radialement intérieur formant piste d'étanchéité a été ajoutée ;
- la figure 17 représente une vue en perspective, depuis l'intérieur, d'un ensemble participant à la formation d'une partie de stator du compresseur montré sur la figure 1, selon encore un autre mode de réalisation préféré, le revêtement radialement intérieur formant piste d'étanchéité ayant été retiré pour des raisons de clarté ;
- la figure 18 représente une vue en coupe prise le long de la ligne XVIII-XVIII de la figure 17 ; et
- la figure 19 représente une vue en coupe prise le long de la ligne XIX-XIX de la figure 17.

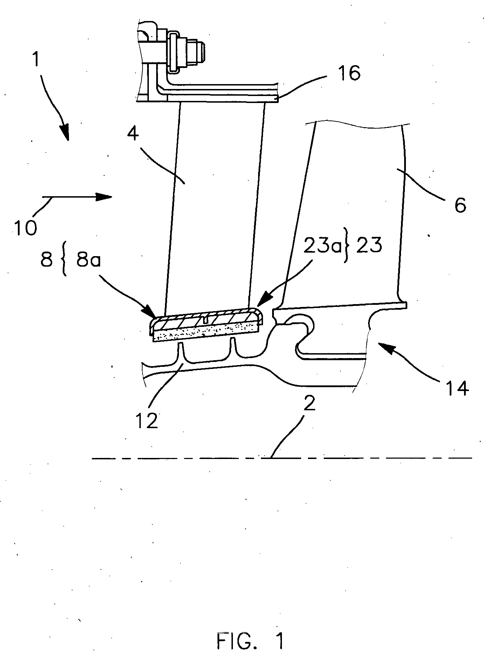

En référence tout d'abord à la figure 1, on peut apercevoir une partie d'un compresseur basse pression 1 pour turbomoteur, selon un mode de réalisation préféré de la présente invention. De façon connue, le compresseur présente, en alternance selon une direction axiale parallèle à l'axe 2 du compresseur, des aubes de stator 4 et des aubes de rotor 6. Les aubes de stator 4, réparties circonférentiellement autour de l'axe 2, s'intègrent dans une partie de stator également objet de l'invention, comprenant en outre une virole intérieure 8 de délimitation radiale intérieure d'un flux annulaire primaire 10 traversant le turbomoteur, cette virole 8 portant les pieds des aubes 4 qui la traversent. A cet égard, il est noté que la partie de stator comprend également des éléments additionnels rapportés sur la virole 8, qui seront décrits ultérieurement, tel qu'un revêtement radialement intérieur abradable formant piste d'étanchéité annulaire, contactée par un dispositif d'étanchéité 12 porté par l'étage de rotor 14 portant les aubes tournantes 6 et agencé en aval de la partie de stator concernée. Comme mentionné ci-dessus, le dispositif d'étanchéité tournant 12 est de façon connue dû type à labyrinthe ou à léchettes.

A cet égard, la virole 8 fait partie intégrante d'une structure annulaire de stator portant la référence 23 sur la figure 1.

Comme visible sur cette figure 1, il est prévu que le stator du compresseur comprenne également une virole extérieure 16 de délimitation radiale extérieure du flux annulaire primaire 10 traversant le turbomoteur, cette virole 16 portant les têtes des aubes 4 de la partie de stator précitée.

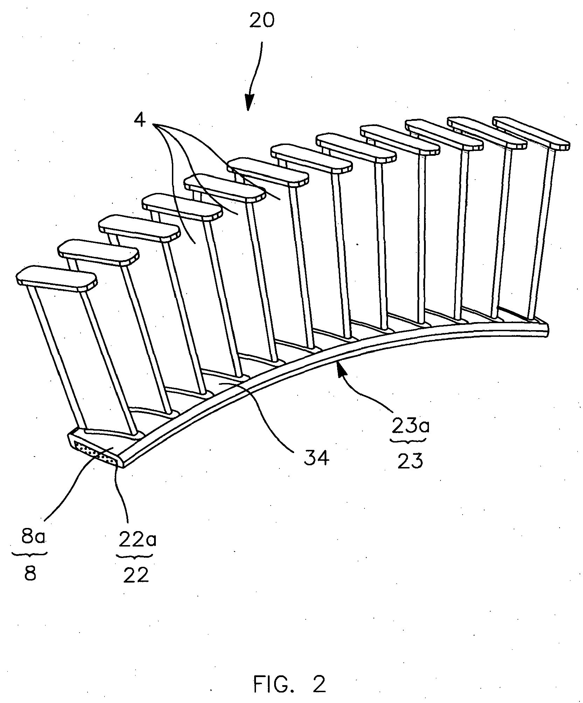

Cette partie de stator est préférentiellement composée par la mise en place d'une pluralité d'ensembles 20 comme celui montré sur la figure 2, constituant chacun une portion angulaire ou circonférentielle de cette partie de stator. Comme visible sur cette figure, chaque ensemble 20 comprend un secteur angulaire de virole 8a portant une pluralité d'aubes de stator 4, la virole 8 résultant de la mise en place de tous les secteurs 8a sur le stator adoptant donc une conception dite segmentée, par opposition à une conception également envisagée, dite continue, dans laquelle la virole est unique et continue sur 360°. Dans la configuration segmentée représentée, les secteurs angulaires 8a (un seul visible sur la figure 2) formant conjointement la virole 8 sont donc de préférence dépourvus de liaisons mécaniques rigides directes les reliant les uns aux autres, leurs extrémités adjacentes étant en effet simplement placées en regard les unes les autres, avec ou sans jeu.

La segmentation opérée pour la virole 8 est également adoptée, d'une manière identique, pour le revêtement radialement intérieur abradable formant piste d'étanchéité annulaire 22, seul un secteur angulaire 22a de ce revêtement annulaire 22 étant porté fixement par le secteur de virole 8a. Ils forment ensemble une, partie d'un secteur angulaire de la structure annulaire objet de l'invention, qui elle aussi adopte donc une configuration dite segmentée.

A titre indicatif, il est noté que le nombre d'ensembles 20 pour former la partie de stator annulaire précitée peut être compris entre 6 et 14, chaque ensemble 20 présentant de préférence la même étendue angulaire/circonférentielle.

Plus précisément en référence aux figuresr 3 et 4, l'ensemble 20 comprend, outre les aubes 4 qui ont été volontairement retirées, le secteur de virole 8a, le secteur de revêtement abradable 22a, et, interposés entre ces deux secteurs, des moyens de remplissage 24 qui seront détaillés ci-après. Les secteurs 8a, 22a et les moyens 24 forment donc conjointement un secteur de structure annulaire 23 de l'ensemble 20, ce secteur portant la référence numérique 23a.

Le secteur 8a présente une section en forme globale de U inversé dont les deux branches 26 du U s'étendent sensiblement dans une direction radiale intérieure 28, à partir de la base 32 de ce U. La surface extérieure 34 de ce U, orientée selon une direction radiale extérieure 30, est celle assurant la délimitation intérieure du flux primaire du turbomoteur. En outre, le secteur 8a comprend une pluralité d'ajours 36 espacés circonférentiellement, chacun destiné à recevoir le pied d'une aube de stator, et étant réalisé en partie à travers la base du U 32.

Pour la réception du pied de l'aube de stator, chaque ajour 36 est rempli d'un matériau amortisseur de vibrations 38 entourant le pied de l'aube associée. Ce matériau amortisseur de vibrations 38 est de préférence prévu pour épouser l'intégralité de la surface de délimitation de l'ajour 36, et forme par conséquent une bande continue et fermée autour du pied d'aube qu'il entoure. Ainsi, il présente d'une part une fente de logement 39 dont la géométrie correspond à la contre-forme du pied d'aube qu'elle reçoit, et d'autre part une surface extérieure correspondant à la contre-forme de la paroi intérieure de l'ajour 36, qui elle aussi présente une forme sensiblement identique ou similaire à celle du pied d'aube, mais agrandie.

Ce matériau 38 amortisseur de vibrations des aubes de stator est par exemple en résine de silicone, de préférence en silicone dit structural, c'est-à-dire présentant une dureté faible, par exemple comprise entre 25 et 45 shore A.

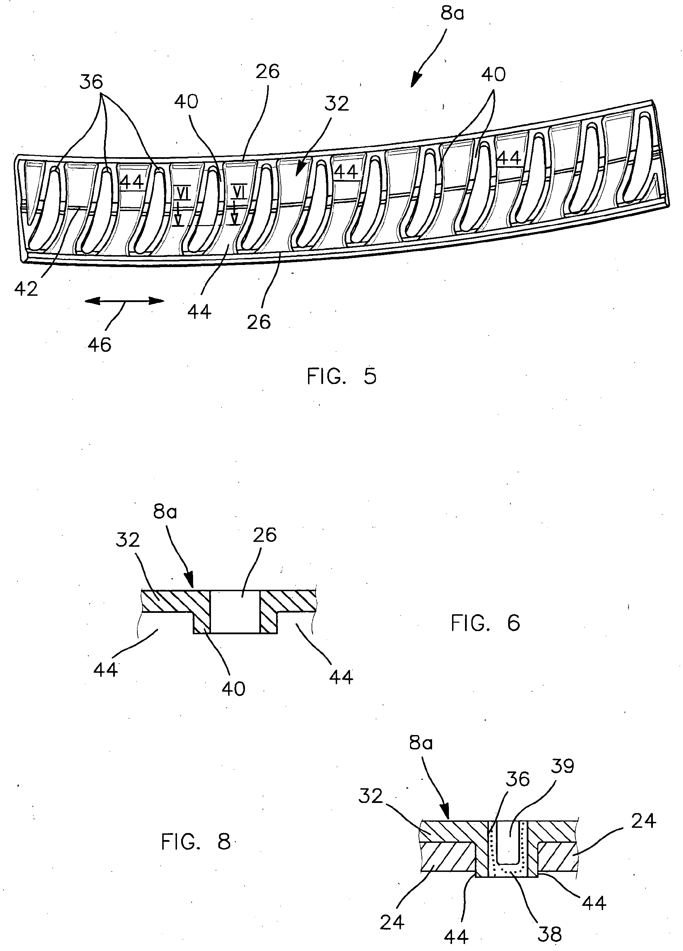

En référence à présent aux figures 5 et 6, les ajours ne sont pas seulement pratiqués dans l'épaisseur de la base du U 32, mais prolongés radialement vers l'intérieur par des moyens de raidissement du secteur prenant ici la forme d'une nervure 40 en saillie à partir de cette base 32. Chaque nervure 40 s'étend de façon fermée sur tout le pourtour de l'ajour 36 qu'elle définit, conjointement avec l'ouverture pratiquée dans la base 32 qu'elle prolonge, de sorte qu'elle adopte une géométrie sensiblement identique ou similaire à celle du pied, mais agrandie. Comme visible sur la figure 5, la nervure 40 peut être rattachée sur les branches du U 26 en se fondant dans celles-ci, respectivement au niveau des portions de l'ajour en regard du bord d'attaque et du bord de fuite du pied d'aube.

A titre indicatif, le rapport entre l'épaisseur de la base du U 32 traversée par l'ajour et la distance radiale en saillie de la nervure 40 complétant ce même ajour est de préférence compris entre 1 et 1/3.

La nervure fermée 40, qui pourrait alternativement prendre la forme de deux demi-nervures placées respectivement de part et d'autre de l'ajour 36 en s'étendant chacune de l'une à l'autre des deux branches du U 26, sans être reliées l'une à l'autre à leurs extrémités, permet de renforcer la rigidité du secteur 8a. A cet égard, il peut également être prévu une nervure circonférentielle 42 faisant aussi saillie radialement intérieurement à partir de la base 32, en étant interrompue par les ajours 36 au niveau des nervures 40. Quoi qu'il en soit, en raison de la présence des nervures 40, un espace 44 ouvert dans la direction radiale intérieure est formé entre deux ajours 36 directement consécutifs. Cet espace 44 est délimité dans la direction radiale extérieure par la base 32 du U, et dans les deux sens de la direction circonférentielle 46 par les deux nervures 40 des deux ajours concernés, respectivement.

Le secteur de virole 8a, comprenant les éléments 26, 32, 40 et 42, est de préférence réalisé d'une seule pièce par moulage par injection haute pression de matériau composite thermoplastique, comprenant par exemple un mélange de résine polyetherimide et de fibres de carbone et/ou de fibres de verre.

Pour la fabrication et le montage de l'ensemble montré sur la figure 2, il est prévu qu'une fois le secteur de virole 8a obtenu, ses espaces ouverts 44 soient chacun partiellement comblé par les moyens de remplissage 24, prenant par exemple la forme de blocs de mousse, de préférence non-métallique et à cellules fermées, telle que de la mousse rigide polymethacrylimide, par exemple celle commercialisée sous la marque ROHACELL^{®} de la société Degussa-Rohacell. D'autres mousses de polymères à faible densité peuvent être utilisées, telles que la mousse de polyuréthane ou de polyetherimide. D'une façon générale, les moyens de remplissage 24 sont réalisés dans un matériau léger dont la densité est plus faible que celle du matériau constituant le revêtement abradable intérieur déposé ultérieurement, le rapport entre les densités étant de préférence inférieur à 0,1.

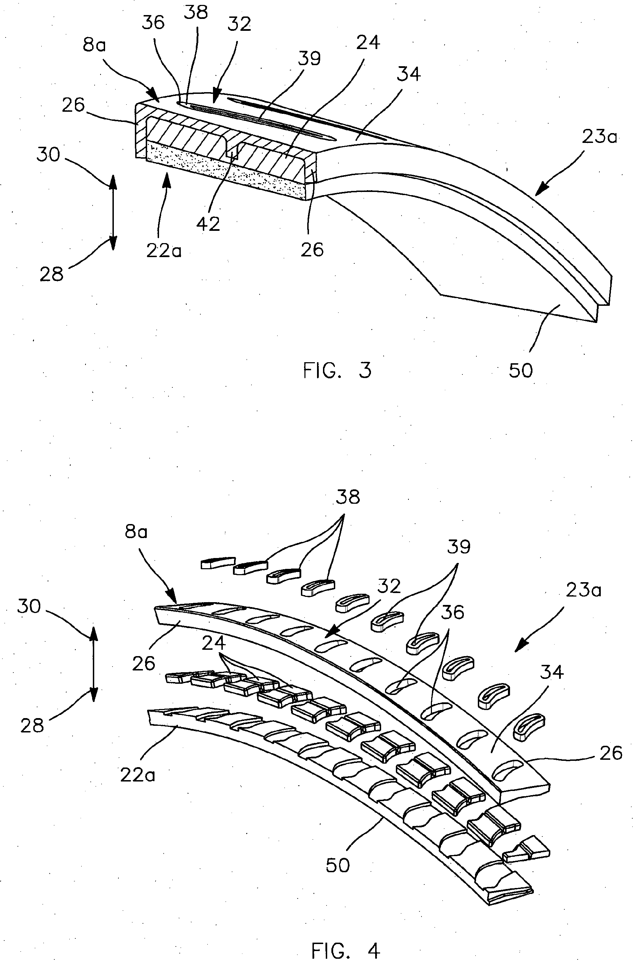

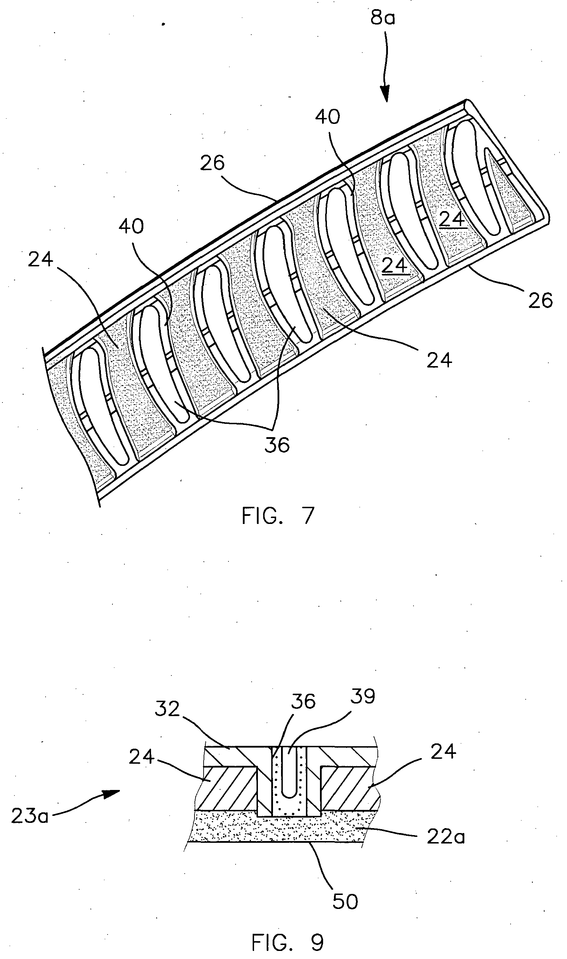

Ainsi, chaque espace 44 est rempli partiellement par un même bloc de mousse 24 de section sensiblement identique à celle de l'espace 44 qu'il occupe, afin d'épouser simultanément la base 32 et les branches 26 du U, ainsi que les deux nervures 40 délimitant cette espace, comme montré sur la figure 7. De plus, comme montré sur la figure 4, chaque bloc 24 peut présenter une rainure sur sa face radialement supérieure, pour le passage de la nervure circonférentielle 42.

Dans ce mode de réalisation préféré, le bloc de mousse formant matériau léger de remplissage ne s'étend donc pas dans tout son espace 44 associé dans la direction radiale intérieure, même si cela pourrait être le cas. A cet égard, il pourrait même s'étendre au-delà de cet espace, sans sortir du cadre de l'invention.

Ensuite, même si cette opération pourrait être réalisée antérieurement à la précédente, la paroi intérieure des ajours 36 est équipée du contour de matériau amortisseur de vibrations 38, qui s'étend sur toute la longueur de l'ajour concerné en laissant apparaître la fente de logement d'aube 39, traversante ou non, comme le montre la figure 8. De préférence, le contour 38 s'étend jusqu'à l'extrémité radiale interne de l'ajour 36, sans faire saillie de celui-ci. Le matériau utilisé est préférentiellement du type résine de silicone à faible dureté, de manière à présenter de bonnes caractéristiques d'amortissement.

A cet égard, il est noté que la résine de silicone structural d'amortissement des vibrations se présente préférentiellement sous forme de liquide légèrement visqueux. Ainsi, il est alors possible de réaliser des préformes en silicone structural ou en élastomère laissant apparaître la fente de logement d'aube 39, ces préformes pouvant ensuite être mises en place dans leurs ajours respectifs 36 avant de réaliser le secteur de revêtement 22a.

Comme évoqué ci-dessus, il est alternativement possible de réaliser d'abord le secteur de revêtement abradable 22a en prévoyant des bouchons dans les ajours 36, puis de monter le secteur de virole autour des aubes, avant de remplir les ajours avec le silicone structural d'amortissement des vibrations, une fois les bouchons retirés.

Dans le cas illustré par les figures où le silicone structural d'amortissement des vibrations est d'abord mis en place, le procédé est poursuivi en réalisant le secteur de revêtement 22a, celui-ci ayant une partie radiale externe pénétrant dans les portions des espaces 44 non comblées par les blocs de mousse 24 déjà installés, cette partie radiale externe étant donc interrompue dans la direction circonférentielle par les ajours 36. Par ailleurs, sa partie radiale interne est quant à elle continue tout le long du secteur 8a, et forme la piste d'étanchéité 50 destinée à être contactée par le joint à labyrinthe précité, tel que cela est visible sur la figure 9. De plus, comme cela est montré sur la figure 3, le secteur de revêtement abradable 22a se prolonge radialement vers l'intérieur au-delà des branches du U 26.

De préférence, le secteur 22a est réalisé en élastomère de silicone, de densité supérieure à celle de la mousse des blocs de remplissage 24, par exemple du type silicone RTV.

Une fois le secteur de structure annulaire 23a obtenu, bien que cela n'ait pas été représenté, les pieds des aubes de stator sont insérés dans les fentes de logement 39 prévues à cet effet, et l'ensemble 20 qui en résulte monté sur le stator du compresseur par fixation de ces mêmes aubes sur la virole extérieure 16.

Chaque ajour 36 peut, en plus de loger le matériau d'amortisseur de vibrations 38, être équipé de moyens mécaniques de rétention de l'aube de stator associée à cet ajour.

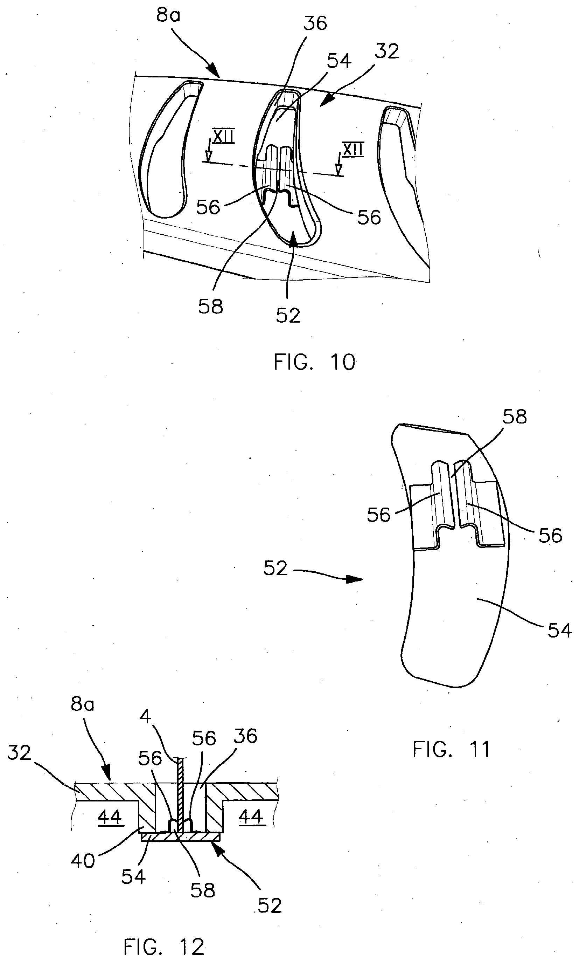

Selon une première forme de réalisation montrée sur les figures 10 à 12, ces moyens prennent la forme d'un clip 52 présentant un support 54 en appui sur l'extrémité radiale intérieure de la nervure 40, délimitant en partie l'ajour concerné. Ce support 54, situé en dehors de l'ajour 36, porte radialement vers l'extérieur deux bras élastiques de rétention 56 pénétrant dans l'ajour, et définissant une fente de rétention 58 de pied de l'aube 4. En effet, le pied inséré dans la fente 58 est maintenu par le serrage exercé par les deux bras 56, étant ici noté que l'espace de l'ajour 36 non occupé par le clip 52 peut être comblé par le matériau amortisseur de vibrations décrit ci-dessus.

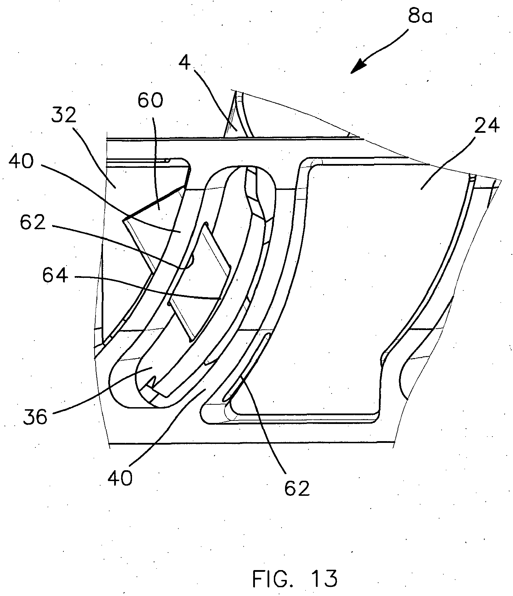

Selon une seconde forme de réalisation montrée sur la figure 13, les moyens mécaniques de rétention prennent, pour chaque ajour, la forme d'une plaquette de rétention 60 traversant deux orifices opposés 62 de la nervure 40, ainsi qu'un orifice 64 prévu dans le pied de l'aube de stator, et aligné avec les deux orifices 62 entre lesquels il se situe. La plaquette 60, de forme par exemple sensiblement parallélépipédique, se retrouve donc située radialement vers l'intérieur de la base du U 32, de préférence sans contact avec celle-ci, tout en lui étant sensiblement parallèle. A titre indicatif, sur la figure 13, la plaquette 60 est représentée dans une configuration en cours de montage, puisqu'elle n'a pas encore été glissée dans le second orifice 62 de la nervure 40.

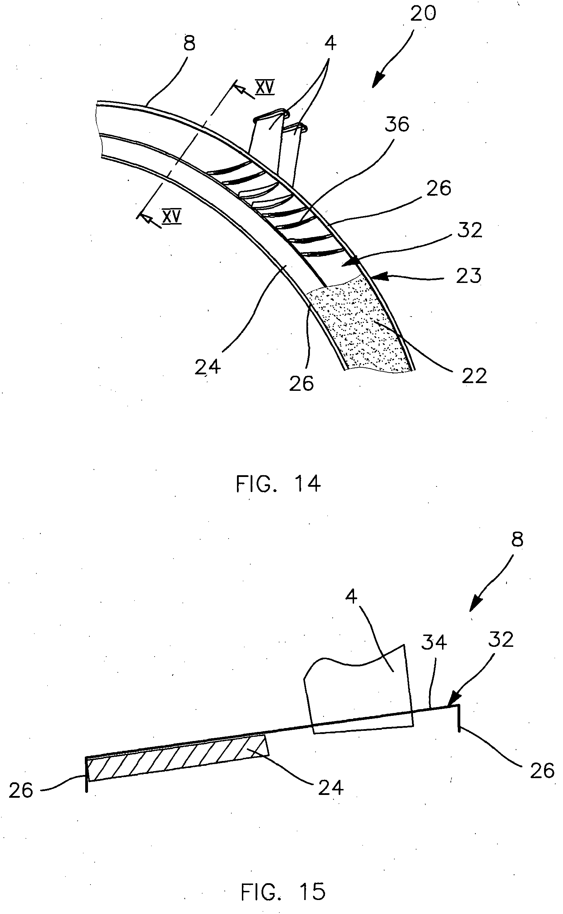

Les figures 14 à 16 montrent un autre mode de réalisation pour l'ensemble 20. A cet égard, sur les figures, il est noté que les éléments portant les mêmes références numériques correspondent à des éléments identiques ou similaires.

Ainsi, on peut voir que la structure annulaire 23 diffère de la précédente en premier lieu par le fait que la virole 8 ne présente plus d'ajours 36 prolongés radialement, mais s'étendant seulement dans l'épaisseur de la base du U 32, en étant traversés par les pieds des aubes 4. De plus, les moyens de remplissage 24 prennent ici la forme d'une bande s'étendant de façon continue sur toute la structure annulaire 23, cette bande 24 étant de ce mode de réalisation préféré décalée axialement des pieds d'aubes, et de préférence d'épaisseur constante. Néanmoins, la bande 24, épousant la surface intérieure de la base U 32, pourrait être continue tout en recouvrant une partie des pieds d'aubes, sans sortir du cadre de l'invention.

Ce mode de réalisation préféré est de préférence mis en oeuvre de façon à être non segmenté, avec un virole de préférence métallique. Néanmoins, il pourrait être segmenté, sans sortir du cadre de l'invention.

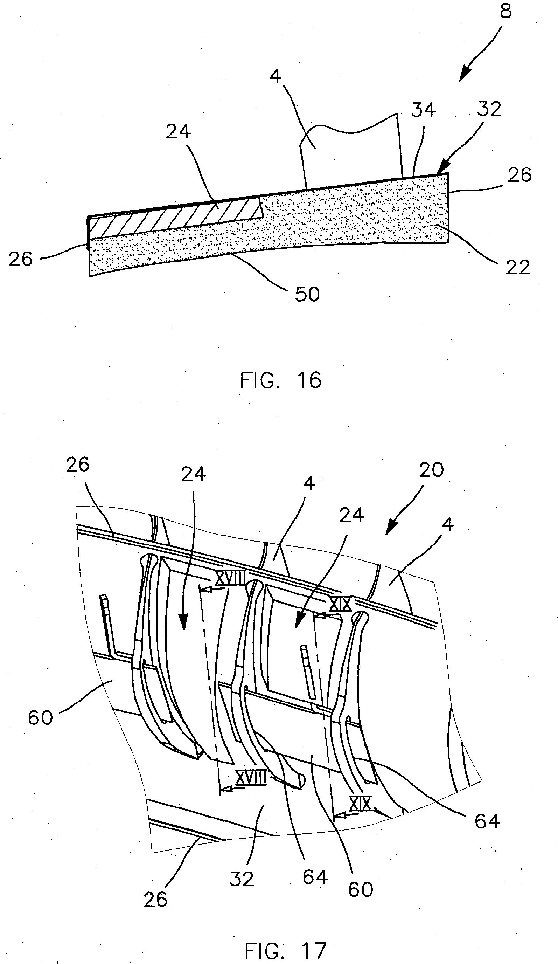

Comme le montre la figure 16, le revêtement 22 formant piste d'étanchéité 50 recouvre à la fois la bande de remplissage 24, et la partie de la surface intérieure de la base du U 32 traversée par les pieds d'aubes. Ainsi, la longueur axiale du revêtement 22 est sensiblement identique à la longueur axiale de cette base du U 32.

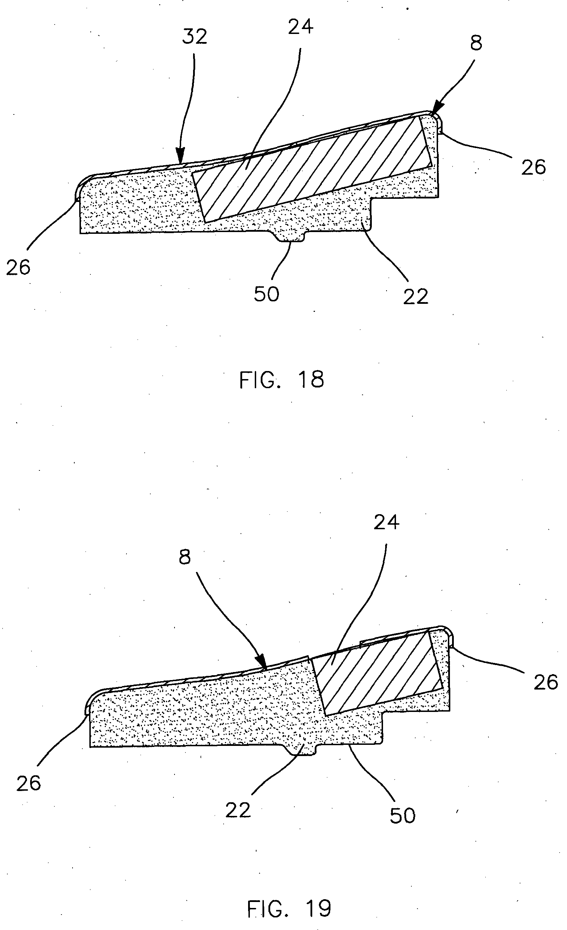

Les figures 17 à 19 montrent encore un autre mode de réalisation pour l'ensemble 20. Ici encore, les ajours 36 s'étendent seulement dans la base du U 32, et les pieds d'aubes faisant saillie radialement vers l'intérieur à partir de cette base sont associés à des moyens mécaniques de rétention prenant la forme de plaquettes de rétention 60 sensiblement identiques ou similaires à celles décrites en référence à la figure 13. La différence réside ici dans le fait que les plaquettes de rétention 60 ne traversent plus les ajours, chacune étant en effet prévue pour traverser uniquement deux pieds d'aubes successifs circonférentiellement, par des orifices 64. Chaque plaquette 60 se trouve donc située au-dessous de la surface intérieure de la base du U 32 qui opère sa rétention, et, indirectement, la rétention des deux aubes 4 traversées par la plaquette.

Dans ce mode de réalisation préféré, les moyens de remplissage 24 prennent globalement la forme de blocs disposés entre les pieds d'aubes, et épousant la surface intérieure de la base du U 32. Ces blocs 24, qui sont donc espacés circonférentiellement les uns des autres, peuvent disposer d'une longueur axiale différente en fonction de leur localisation. Ainsi, tel que cela est visible sur les figures 17 à 19, chaque bloc de remplissage 24 situé entre deux plaquettes de rétention 60 peut présenter une longueur axiale sensiblement importante du fait de l'espace vide créé entre ces deux plaquettes, tandis que chaque bloc de remplissage 24 situé au niveau d'une plaquette de rétention 60 présente une longueur axiale sensiblement inférieure, du fait de l'encombrement créé par cette plaquette.

Dans tous les cas, ces plaquettes 60 ainsi que la surface intérieure de la base du U 32 non recouverte par les blocs 24 sont ensuite recouvertes par le revêtement 22 formant piste d'étanchéité 50.

Bien entendu, diverses modifications peuvent être apportées par l'homme du métier à l'invention qui vient d'être décrite, uniquement à titre d'exemples non limitatifs.

## Revendications

1. Secteur de structure annulaire (23a) de stator pour module de turbomoteur d'aéronef, ledit secteur comprenant un secteur de virole de stator (8a) destiné à délimiter radialement vers l'intérieur un flux primaire (10) traversant ledit turbomoteur, ledit secteur de virole (8a) comprenant une pluralité d'ajours (36) chacun destiné à recevoir le pied d'une aube de stator (4), ledit secteur de structure annulaire (23a) comprenant en outre un secteur (22a) de revêtement radialement intérieur formant piste d'étanchéité annulaire (50) et réalisé dans un premier matériau, ledit secteur (22a) de revêtement radialement intérieur étant destiné à être contacté par une partie tournante (12) dudit turbomoteur, et rapporté sur ledit secteur de virole (8a),
**caractérisée en ce qu'**il comprend en outre, interposés entre ledit secteur (8a) de virole et ledit secteur (22a) de revêtement intérieur, des moyens de remplissage (24) réalisés dans un second matériau disposant d'une densité inférieure à celle dudit premier matériau,
et **en ce que** le rapport entre les densités des premier et second matériaux est inférieur à 0,1.

2. Secteur de structure annulaire de stator selon la revendication 1, **caractérisé en ce que** ledit second matériau est de la mousse, de préférence non-métallique.

3. Secteur de structure annulaire de stator selon l'une quelconque des revendications précédentes, **caractérisé en ce que** lesdits moyens de remplissage (24) sont interposés entre ledit secteur de virole (8a) et ledit secteur de revêtement intérieur (22a) formant piste d'étanchéité (50), sur toute ou partie de la longueur circonférentielle.

4. Secteur de structure annulaire de stator selon l'une quelconque des revendications précédentes, **caractérisé en ce que** ledit secteur de virole (8a) présente une section en forme globale de U dont les deux branches du U (26) s'étendent sensiblement dans une direction radiale intérieure à partir de la base de ce U (32), ledit secteur de virole (8a) comprenant une pluralité d'ajours (36) chacun destiné à recevoir le pied d'une aube de stator (4), chaque ajour étant pratiqué à travers ladite base du U.

5. Secteur de structure annulaire de stator selon la revendication 4, **caractérisé en ce que** chaque ajour (36) est prolongé par des moyens de raidissement (40) de la virole en saillie à partir de ladite base du U (32), sensiblement dans ladite direction radiale intérieure (28), lesdits moyens de raidissement prennent la forme d'une nervure (40) s'étendant sur sensiblement tout le pourtour de l'ajour (36) qu'elle définit.

6. Secteur de structure annulaire de stator selon la revendication 5, **caractérisé en ce qu'**un espace (44) ouvert dans ladite direction radiale intérieure est formé entre deux ajours (36) quelconques directement consécutifs, ledit espace ouvert (44) étant délimité dans la direction radiale extérieure (30) par la base du U (32), et dans les deux sens de la direction circonférentielle (46) par les deux nervures (40) des deux ajours quelconques directement consécutifs, respectivement.

7. Secteur de structure annulaire de stator selon la revendication 6, **caractérisé en ce que** lesdits moyens de remplissage (24) sont logés au moins partiellement dans lesdits espaces ouverts (44).

8. Structure annulaire de stator **caractérisée en ce qu'**elle est réalisée à l'aide d'un secteur annulaire (8a) selon l'une quelconque des revendications précédentes ou de façon segmentée à l'aide de plusieurs secteurs angulaires adjacents (23a) selon l'une quelconque des revendications précédentes.

9. Partie de stator pour module de turbomoteur d'aéronef comprenant un secteur de structure annulaire de stator (23) selon l'une quelconque des revendications 1 à 7.

10. Partie de stator selon la revendication 9, **caractérisée en ce qu'**elle comprend une pluralité d'aubes de stator (4) chacune montée dans un ajour (36) de ladite virole, chaque ajour étant rempli d'un matériau amortisseur de vibrations (38) coopérant avec le pied de l'aube de stator associée.

11. Module de turbomoteur d'aéronef comprenant au moins une partie de stator selon l'une quelconque des revendications 9 et 10.

12. Module selon la revendication 11, caractérisé qu'il est un compresseur, de préférence basse pression.

13. Turbomoteur pour aéronef comprenant au moins un module selon la revendication 11 ou la revendication 12.

## Patentansprüche

1. Ringstruktursektor (23a) eines Stators für ein Flugzeugtriebwerksmodul, wobei der Sektor einen Statorringsektor (8a) umfasst, der dazu bestimmt ist, einen Primärstrom (10), welcher das Triebwerk durchströmt, radial nach innen zu begrenzen, wobei der Ringsektor (8a) eine Vielzahl von Durchbrüchen (36) umfasst, von denen ein jeder dazu bestimmt ist, den Fuß einer Statorschaufel (4) aufzunehmen, wobei der Ringstruktursektor (23a) ferner einen radial inneren Beschichtungssektor (22a) umfasst, welcher eine ringförmige Dichtungsspur (50) bildet und aus einem ersten Material gefertigt ist, wobei der radial innere Beschichtungssektor (22a) dazu bestimmt ist, durch einen umlaufenden Teil (12) des Triebwerks kontaktiert zu werden, und an den Ringsektor (8a) angesetzt ist,
**dadurch gekennzeichnet, dass** er ferner, zwischen dem Ringsektor (8a) und dem inneren Beschichtungssektor (22a) eingefügt, Füllmittel (24) umfasst, die aus einem zweiten Material, welches über eine geringere Dichte als das erste Material verfügt, gefertigt sind,
und dass das Verhältnis zwischen den Dichten des ersten und des zweiten Materials kleiner als 0,1 ist.

2. Ringstruktursektor eines Stators nach Anspruch 1, **dadurch gekennzeichnet, dass** das zweite Material Schaum, vorzugsweise nichtmetallischer, ist.

3. Ringstruktursektor eines Stators nach einem der vorhergehenden Ansprüche, **dadurch gekennzeichnet, dass** die Füllmittel (24) zwischen dem Ringsektor (8a) und dem eine Dichtungsspur (50) bildenden inneren Beschichtungssektor (22a) über die gesamte Umfangslänge oder einen Teil dieser eingefügt sind.

4. Ringstruktursektor eines Stators nach einem der vorhergehenden Ansprüche, **dadurch gekennzeichnet, dass** der Ringsektor (8a) einen insgesamt U-förmigen Querschnitt aufweist, bei dem die beiden Schenkel des U (26) sich ab der Basis dieses U (32) im Wesentlichen in einer radialen Innenrichtung erstrecken, wobei der Ringsektor (8a) eine Vielzahl von Durchbrüchen (36) umfasst, von denen ein jeder dazu bestimmt ist, den Fuß einer Statorschaufel (4) aufzunehmen, wobei jeder Durchbruch durch die Basis des U hindurch ausgebildet ist.

5. Ringstruktursektor eines Stators nach Anspruch 4, **dadurch gekennzeichnet, dass** jeder Durchbruch (36) durch Mittel zum Versteifen (40) des Rings, welche von der Basis des U (32) aus, im Wesentlichen in der radialen Innenrichtung (28) vorspringen, fortgesetzt ist, wobei die Versteifungsmittel die Form einer Rippe (40) annehmen, die sich über im Wesentlichen den gesamten Umfang des Durchbruchs (40), den sie definiert, erstreckt.

6. Ringstruktursektor eines Stators nach Anspruch 5, **dadurch gekennzeichnet, dass** ein in der radialen Innenrichtung offener Raum (44) zwischen zwei beliebigen, direkt aufeinanderfolgenden Durchbrüchen (36) ausgebildet ist, wobei der offene Raum (44) in der radialen Außenrichtung (30) durch die Basis des U (32) bzw. in den beiden Richtungen der Umfangsrichtung (46) durch die beiden Rippen (40) der zwei beliebigen, direkt aufeinanderfolgenden Durchbrüche begrenzt ist.

7. Ringstruktursektor eines Stators nach Anspruch 6, **dadurch gekennzeichnet, dass** die Füllmittel (24) wenigstens teilweise in den offenen Räumen (44) aufgenommen sind.

8. Ringstruktur eines Stators, **dadurch gekennzeichnet, dass** sie mit Hilfe eines Ringsektors (8a) nach einem der vorhergehenden Ansprüche oder segmentiert mit Hilfe von mehreren benachbarten Winkelsektoren (23a) nach einem der vorhergehenden Ansprüche ausgebildet ist.

9. Statorteil für ein Flugzeugtriebwerksmodul, der einen Ringstruktursektor eines Stators (23) nach einem der Ansprüche 1 bis 7 umfasst.

10. Statorteil nach Anspruch 9, **dadurch gekennzeichnet, dass** er eine Vielzahl von Statorschaufeln (4) umfasst, von denen eine jede in einem Durchbruch (36) des Rings angebracht ist, wobei jeder Durchbruch mit einem Schwingungsdämpfungsmaterial (38), das mit dem Fuß der zugeordneten Statorschaufel zusammenwirkt, gefüllt ist.

11. Flugzeugtriebwerksmodul, das wenigstens einen Statorteil nach einem der Ansprüche 9 und 10 umfasst.

12. Modul nach Anspruch 11, **dadurch gekennzeichnet, dass** es ein Verdichter, vorzugsweise Niederdruckverdichter ist.

13. Triebwerk für ein Flugzeug, das wenigstens ein Modul nach Anspruch 11 oder Anspruch 12 umfasst.

## Claims

1. An annular structure sector (23a) of a stator for a module of an aircraft turboshaft engine, said sector comprising a stator ferrule sector (8a) intended to delimit radially inward a primary flow (10) passing through said turboshaft engine, said ferrule sector (8a) comprising a plurality of perforations (36) each intended to receive the root of a stator vane (4), said annular structure sector (23a) further comprising a radially inner coating sector (22a) coating forming an annular sealing path (50) and made of a first material, said radially inner coating sector (22a) being intended to be contacted by a rotating portion (12) of said turboshaft engine, and applied to said ferrule sector (8a),
**characterized in that** it further comprises, interposed between said ferrule sector (8a) and said inner coating sector (22a), filling means (24) made of a second material having a smaller density than that of said first material,
and **in that** the ratio between the densities of the first and second materials is less than 0.1.

2. The annular structure sector of a stator according to claim 1, **characterized in that** said second material is a preferably non-metallic foam.

3. The annular structure sector of a stator according to any one of the preceding claims, **characterized in that** said filling means (24) are interposed between said ferrule sector (8a) and said inner coating sector (22a) forming a sealing path (50), over all or a portion of the circumferential length.

4. The annular structure sector of a stator according to any one of the preceding claims, **characterized in that** said ferrule sector (8a) has a section in the overall shape of a U, of which the two branches of the U (26) extend substantially in an inward radial direction from the base of this U (32), said ferrule sector (8a) comprising a plurality of perforations (36) each intended to receive the root of a stator vane (4), each perforation being made through said base of the U.

5. The annular structure sector of a stator according to claim 4, **characterized in that** each perforation (36) is prolonged by stiffening means (40) of the ferrule protruding from said base of the U (32), substantially in said inner radial direction (28), said stiffening means taking the form of a rib (40) extending over substantially the entire perimeter of the perforation (36) that it defines.

6. The annular structure sector of a stator according to claim 5, **characterized in that** a space (44), open in said inward radial direction, is formed between any two directly consecutive perforations (36), said open space (44) being delimited in the outward radial direction (30) by the base of the U (32), and in both directions of the circumferential direction (46) by the two ribs (40) of the any two directly consecutive perforations, respectively.

7. The annular structure sector of a stator according to claim 6, **characterized in that** said filling means (24) are housed at least partially in said open spaces (44).

8. The annular structure sector of a stator, **characterized in that** it is made using an annular sector (8a) according to any one of the preceding claims, or in segmented fashion using several adjoining angular sectors (23a) according to any one of the preceding claims.

9. A portion of a stator for a module of an aircraft turboshaft engine comprising a annular structure sector of a stator (23) according to any one of Claims 1 to 7.

10. The portion of a stator according to claim 9, **characterized in that** it comprises a plurality of stator vanes (4), each mounted in a perforation (36) of said ferrule, each perforation being filled with a vibration damping material (38) cooperating with the root of the associated stator vane.

11. A module of an aircraft turboshaft engine comprising at least one portion of a stator according to any one of claims 9 and 10.

12. The module according to claim 11, **characterized in that** it is a compressor, preferably a low pressure compressor.

13. A turboshaft engine for aircraft containing at least one module according to claim 11 or claim 12.
